# EUROPÄISCHE PATENTSCHRIFT

(11) **EP 1 526 628 B1**
(45) Veröffentlichungstag und Bekanntmachung des Hinweises auf die Patenterteilung: **02.03.2011**
(21) Anmeldenummer: 03023996.6
(22) Anmeldetag: 22.10.2003
(51) Int. Cl.: H02K 3/52

(54) **Verschaltungseinheit für einen Stator eines Elektromotors**
Connection unit for a stator of an electric motor
Unité de connexion d'un stator de moteur électrique

(43) Veröffentlichungstag der Anmeldung: 27.04.2005
(73) Patentinhaber: Brose Fahrzeugteile GmbH & Co. KG, Würzburg, 97076 Würzburg (DE)
(72) Erfinder: Schulz, Hermann, 97355 Kleinlangheim (DE); Gilly, Joachim, 97230 Estenfeld (DE); Redelberger, Harald, 97273 Kürnach (DE); De Filippis, Pietro, 20124 Milano (IT)
(74) Vertreter: Reinhard - Skuhra - Weise & Partner GbR

(56) Entgegenhaltungen:
- EP-A- 0 777 312
- WO-A-03/001647
- JP-A- 2000 078 804
- JP-A- 2001 218 409
- JP-A- 2001 314 055
- US-A1- 2003 090 166
- US-A1- 2003 173 854

## Beschreibung

Die Erfindung betrifft einen Stator für einen Elektromotor.

Zur Gewährleistung der Funktion eines Elektromotors müssen unter anderem die dem Stator des Motors zugehörigen Spulen in bestimmter Weise miteinander verschaltet werden. Die Art und Weise dieser Verschaltung wird durch das Wickelschema des Stators definiert und bestimmt das dem Motor zugrundeliegende Wirkungsprinzip. Beispielsweise kann das Wickelschema eine Sternschaltung der Spulen oder eine Dreieckschaltung der Spulen beschreiben. Gehört dem Stator eine Vielzahl von miteinander zu verschaltenden Spulen an, dann ist die Verschaltung sehr aufwendig, da die jeweiligen Spulen durch Einzeldrähte in bestimmter Weise miteinander zu verbinden sind.

Aus der DE 100 45 471 A1 ist bereits ein Stator für Elektromotoren bekannt. Bei diesem ist eine aus mehreren Wicklungssträngen bestehende Statorwicklung in die Statornuten eines Statorkernes eingezogen. Die die Nut verlassenden Drahtanfänge und Drahtenden der Wicklungsstränge werden direkt an mindestens eine am Statorkern befestigte Kontaktiereinrichtung geführt und mit dieser verbunden. Alle Anschlussenden der Drähte verlassen die Statornuten am jeweiligen Nutgrund. Weiterhin ist am Stator ein Verschaltungsträger angeordnet. Dieser ist zur Führung der Anschlussenden der Drähte zur Kontaktiereinrichtung vorgesehen. Der Verschaltungsträger weist eine auf dem Statorkern angeordnete, im wesentlichen kreisringförmige Verlegeplatte auf, die mit Umlenk- und Führungselementen, beispielsweise Haken und Stegen, versehen ist. Weiterhin beinhaltet der Verschaltungsträger an die Verlegeplatte angeformte Kontaktkammern, die zu Steckbereichen zusammengefasst sind. Ein erster dieser Steckbereiche ist als Steckersockel zur Herstellung des externen Motoranschlusses ausgebildet. Ein zweites dieser Steckteile, welches gegenüberliegend zum ersten Steckteil an der Verlegeplatte angeordnet ist, wird zur Herstellung der internen elektrischen Verbindungen der einzelnen Wicklungsstränge verwendet. Auch bei diesem Stand der Technik sind die Spulen bzw. Wicklungsstränge durch Einzeldrähte miteinander zu verbinden.

Weiterhin ist aus dem Dokument EP 0 777 312 A2 ein Stator für Elektromotoren bekannt, der eine an einer Stirnseite angeordnete Verschaltungsanordnung für die Statorwicklung aufweist. Die Verschaltungsanordnung weist ein Isolierteil mit nutförmigen Kammern für die Aufnahme von elektrisch gegeneinander isolierten Verbindungsleitern für die Verschaltung der Wicklungsdrahtenden der Statorwicklung auf. Die Verschaltungsanordnung ist dabei auf den Wickelkopf der vorher vollständig eingebrachten Statorwicklung aufgesetzt und ist über Zapfen oder weitere Isolierteile mit dem Stator verbunden. Dadurch ergibt sich eine zusätzliche Bauhöhe, über die auch die Spulendrähte zur Kontaktierung mit den Verbindungsleitern verlegt werden müssen.

Aus der DE 101 52 006 A1 ist bereits ein Stator für eine elektrische Maschine bekannt, der ein ringförmiges Statorjoch, Statorspulen und eine an seiner Stirnseite angeordnete Verschaltungsanordnung für die Statorspulen aufweist. Die Verschaltungsanordnung enthält elektrisch gegeneinander isolierte Verbindungsleiter, die konzentrisch zueinander angeordnet sind und von diesen abstehende Anschlüsse für die Enden der Statorspulen aufweisen. Die Wickelkörper des Stators sind mit Aufnahmeöffnungen versehen, welche die abstehenden Anschlüsse der Verbindungsleiter aufnehmen und die verbindungsleiter in deren Lage fixieren.

Aus der JP 2000 078 804 ist bereits ein Stator bekannt, der ein ringförmiges Statorpaket enthält, das eine Mehrzahl von sich nach innen erstreckenden Statorzähnen aufweist. Auf der Stirnseite des Statorpaketes ist eine ringförmige Verschaltungseinheit angeordnet. Diese weist einen Trägerbauteil mit sich nach innen erstreckenden Wicklungsträgerelement auf. Diese schließen an die Statorzähne an, sind als Nutisolierelemente ausgebildet und weisen Ausformungen auf, die ein Abrutschen der Wicklungen vom jeweiligen Statorzahn verhindern.

Der Erfindung liegt die Aufgabe zugrunde, einen Stator für einen Elektromotor anzugeben, bei welchem die Verschaltung der Spulen verbessert ist, insbesondere auch durch definierte Führung der Spulendrahtenden zur Kontaktierung.

Diese Aufgabe wird durch einen Stator mit den im Anspruch 1 angegebenen Merkmalen gelöst. Vorteilhafte Ausgestaltungen und Weiterbildungen der Erfindung ergeben sich aus den abhängigen Ansprüchen.

Die Vorteile der Erfindung bestehen insbesondere darin, dass der Statoraufbau im Vergleich zum Stand der Technik vereinfacht ist. Insbesondere müssen keine komplizierten Verschaltungen der einzelnen Spulen unter Verwendung von Einzeldrähten erfolgen. Das bisher übliche prozesstechnisch schwierige Löten oder andersartiges Verbinden von Drähten entfällt. Es wird durch ein einfaches Widerstandsschweißen ersetzt.

Ein weiterer Vorteil der Erfindung besteht darin, dass die stirnseitige Bauhöhe des Stators verringert ist, da aufgrund der bei der Erfindung vorgesehenen Kontaktierung mittels Schaltringen keine losen Drähte mehr gebündelt werden müssen. Die Maximalmaße des Stators sind exakt definierbar. Die Gefahr loser Drähte ist durch genau definierte Schweißpositionen und Umlenkelementen nahezu ausgeschlossen. Durch die vorgegebene exakte Drahtführung ist beim Wickeln und Schweißen die Prozesssicherheit bei der Statorherstellung gewährleistet. Die Gefahr eines Auftretens von Kurzschlüssen ist stark reduziert.

Dazu kommt ein Terminationsring genannte Verschaltungseinheit zum Einsatz, die aus einem ringförmigen Trägerbauteil aus Kunststoff und darin aufgenommenen Schaltringen besteht. Bei dem Terminationsring handelt es sich vorzugsweise um ein einteiliges, im Spritzgussverfahren hergestelltes, ringförmiges Kunststoffformteil, welches in einem eingelegte oder eingesteckte Schaltringe aufweist, die durch in den Hohlraum hineinreichende, zwischen den Schaltringen angeordnete Trennwände voneinander isoliert sind. An seiner Innenseite ist das Trägerbauteil mit Wicklungsträgerelementen versehen, die unmittelbar an die Statorzähne des Statorpakets anschließen und gemeinsam mit den Statorzähnen von der jeweiligen Einzelzahnwicklung umschlossen sind. Ein derartiges einteiliges Kunststoffformteil ist in einfacher Weise mittels eines Kunststoff-Spritzgießverfahrens herstellbar.

Weitere vorteilhafte Eigenschaften der Erfindung ergeben sich aus deren beispielhafter Erläuterung anhand der Figuren. Es zeigt
- Figur 1: eine perspektivische Ansicht eines Stators gemäß der Erfindung,
- Figur 2: eine schematische Draufsicht auf das unbewickelte ringförmige Statorpaket des Stators,
- Figur 3: eine Darstellung zur Veranschaulichung der Bestand- teile einer erfindungsgemäßen Verschaltungseinheit,
- Figur 4: eine perspektivische Darstellung eines Schaltringes,
- Figur 5: eine Skizze zur Veranschaulichung der Einbringung der Schaltringe in den Hohlraum des Trägerbauteils und
- Figur 6: eine Darstellung einer Draufsicht auf einen bereits mit Wicklungen versehenen Stator.

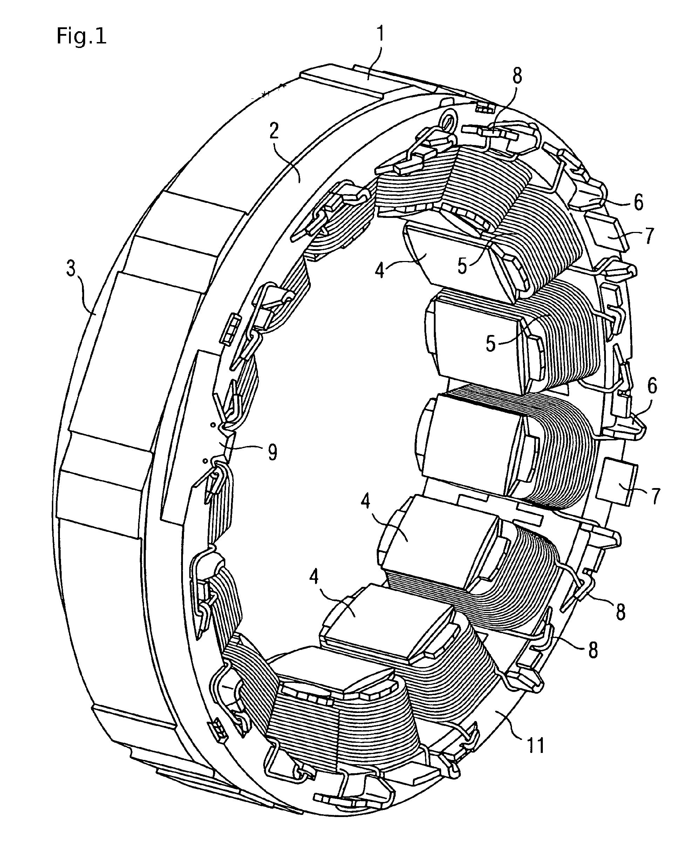

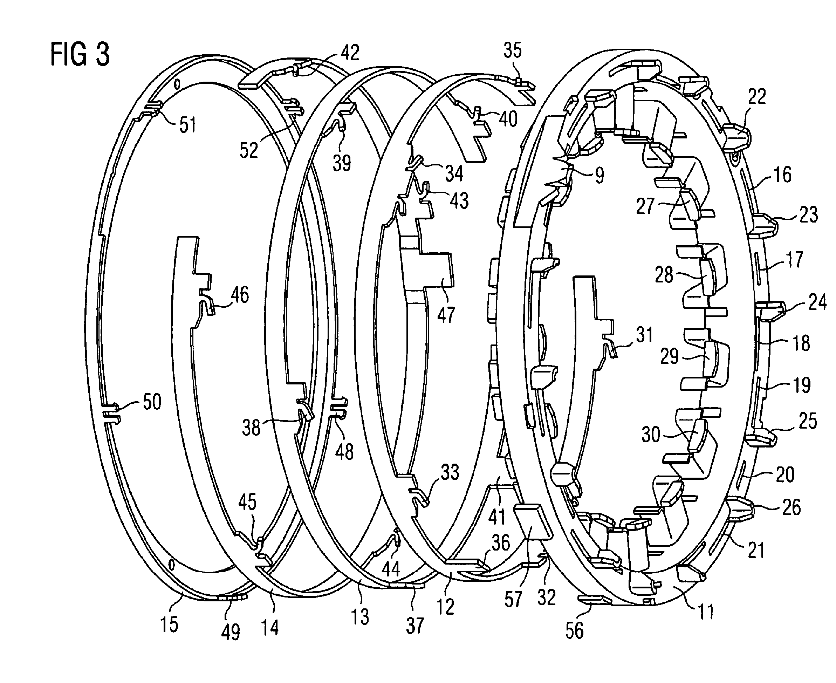

Die Figur 1 zeigt eine perspektivische Ansicht eines Stators gemäß der Erfindung. Der dargestellte Stator weist ein ringförmiges Statorpaket 1 auf, das mit einer Mehrzahl von sich nach innen erstreckenden Statorzähnen versehen ist. Von diesen Statorzähnen sind in der Figur einige mit der Bezugsziffer 4 versehen. Jeder dieser Statorzähne trägt eine Einzelzahnwicklung 5. Weiterhin weist der dargestellte Stator an seiner vorderen Stirnseite eine ringförmige Verschaltungseinheit 2 auf, deren Aufbau unten anhand der Figur 3 erläutert wird. Diese Verschaltungseinheit 2 weist unter anderem ein Trägerbauteil 11 auf, welches mit Umlenkelementen 6 und einer Vielzahl von Schlitzen versehen ist, durch welche Kontaktierelemente 7 und 8 nach außen geführt sind. Weiterhin weist die Verschaltungseinheit 2 ein Drahtführungselement 9 auf. Dieses ist mit zwei Einkerbungen versehen, die zur Aufnahme des Anfangs und des Endes des Wicklungsdrahtes vorgesehen sind. Ferner enthält der dargestellte Stator an seiner hinteren Stirnseite einen Isolierring 3 oder alternativ dazu - beispielsweise beim Vorliegen einer Sternschaltung - eine weitere Verschaltungseinheit.

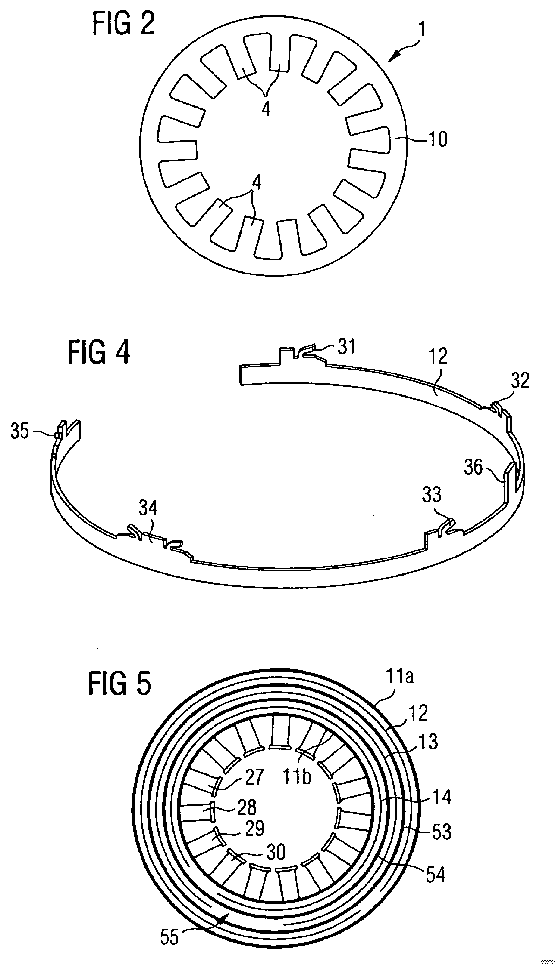

Die Figur 2 zeigt eine schematische Draufsicht auf das noch unbewickelte ringförmige Statorpaket 1 des Stators. Es ist ersichtlich, dass das dargestellte Statorpaket einen ringförmigen Träger 10 aufweist, von dem ausgehend sich die Statorzähne nach innen erstrecken. Einige dieser Statorzähne sind mit der Bezugsziffer 4 gekennzeichnet. Beim gezeigten Ausführungsbeispiel sind insgesamt 15 Statorzähne 4 vorgesehen. Mittels eines derartigen Statorpaketes wird beispielsweise eine Dreieckschaltung der Statorspulen realisiert, wobei - wie noch erläutert wird - die elektrische Kontaktierung der Statorwicklungen 5 unter Verwendung von Schaltringen 12, 13 und 14 realisiert wird, die in einem Hohlraum des Trägerbauteils 11 angeordnet sind und die in der Figur 1 gezeigten Kontaktierelemente 7 und 8 aufweisen.

Die Figur 3 zeigt eine Darstellung zur Veranschaulichung der Bestandteile der auf der vorderen Stirnseite des Statorpakets angeordneten Verschaltungseinheit 2. Die dargestellte Verschaltungseinheit 2 weist ein Trägerbauteil 11, einen ersten Schaltring 12, einen zweiten Schaltring 13, einen dritten Schaltring 14 und eine Abdeckung 15 auf.

Bei dem Trägerbauteil 11 handelt es sich um ein einteiliges Kunststoffformteil, das mittels eines Kunststoff-Spritzgießverfahrens hergestellt werden kann. Das Trägerbauteil 11 weist auf seiner vom Statorpaket abgelegenen Stirnseite Umlenkelemente auf, von denen einige in der Figur 3 mit den Bezugszahlen 22, 23, 24, 25 und 26 versehen sind. Weiterhin enthält das Trägerbauteil 11 in der Nähe jedes Umlenkelementes einen Schlitz, welcher zur Durchführung eines der Kontaktierelemente eines Schaltrings vorgesehen ist. Einige dieser Schlitze sind in der Figur 3 mit den Bezugszahlen 16, 17, 18, 19, 20 und 21 versehen. Ferner hat das Trägerbauteil 11 ein Drahtführungselement 9, welches zwei Einkerbungen aufweist. Diese sind zur Aufnahme bzw. Führung des Drahtanfangs und Drahtendes des Wicklungsdrahtes vorgesehen. Schließlich ist das Trägerbauteil 11 an seiner Innenseite mit sich nach innen erstreckenden Wicklungsträgerelementen versehen, von denen in der Figur 3 einige mit den Bezugszahlen 27, 28, 29 und 30 versehen sind. Diese Wicklungsträgerelemente schließen bei zusammengesetztem Stator unmittelbar an die Statorzähne 4 des Statorpaketes 1 an und werden gemeinsam mit diesen Statorzähnen beim Aufbringen der Wicklung von der Wicklung umschlossen. Diese Wicklungsträgerelemente dienen auch als Nutisolierelemente. Weiterhin verhindern sie ein Abrutschen der Wicklung vom jeweiligen Statorzahn und unterstützen einen gleichmäßigen Wicklungsaufbau, um den Raum für die Drähte optimal auszunutzen, womit eine Füllgraderhöhung erreicht wird.

Das in der Figur 3 dargestellte Trägerbauteil 11 ist ferner mit Orientierungslaschen 56 und 57 versehen. Diese dienen zur korrekten Positionierung des Terminationsringes auf dem Statorpaket.

Weiterhin weist das Trägerbauteil 11 auf seiner dem Statorpaket zugewandten Stirnseite einen Hohlraum auf, in welchen die in der Figur 3 gezeigten Schaltringe 12, 13 und 14 eingesetzt sind. Diese Schaltringe bestehen aus elektrisch leitfähigem Material, beispielsweise aus verzinntem Kupfer. Innerhalb des Hohlraumes des Trägerbauteils 11 sind die Schaltringe elektrisch voneinander isoliert, wie es noch unten im Zusammenhang mit der Figur 5 erläutert wird. Diese elektrische Isolierung erfolgt beim gezeigten Ausführungsbeispiel durch Trennwände, welche Bestandteile des als Kunststoffformteil realisierten Trägerbauteils 11 sind.

Jeder der Schaltringe 12, 13, 14 weist Kontaktierelemente auf, die bei in den Trägerbauteil 11 eingesetztem Schaltring durch die Schlitze auf der Stirnseite des Trägerbauteil 11, beispielsweise die Schlitze 16 - 21, nach außen ragen. Dabei wird unterschieden zwischen ersten Kontaktierelementen 8 und zweiten Kontaktierelementen 7. Die ersten Kontaktierelemente 8 dienen zur internen Kontaktierung, d. h. zur elektrischen Kontaktierung einer der Wicklungen 5 des Stators mit einer gewünschten weiteren Wicklung 5 des Stators. Diese ersten Kontaktierelemente 8 sind als Kontaktierhaken ausgeführt. Die zweiten Kontaktierelemente 7 dienen zur externen Kontaktierung, d.h. zur Kontaktierung des jeweiligen Schaltringes 12, 13 und 14 mit einer externen Elektronik oder einer externen Stromversorgung. Die zweiten Kontaktierelemente 7 sind als Steckzungen ausgebildet.

Aus der Figur 3 ist ersichtlich, dass der Schaltring 12 erste Kontaktierelemente 31, 32, 33, 34 und 35 aufweist und weiterhin mit einem als Steckzunge realisierten zweiten Kontaktierelement 36 versehen ist. Der Schaltring 13 enthält erste Kontaktierelemente 37, 38, 39, 40 und ein weiteres erstes Kontaktierelement, das in der Figur 3 durch das Trägerbauteil 11 verdeckt ist. Ferner ist der Schaltring 13 mit einem als Steckzunge realisierten zweiten Kontaktierelement 41 versehen. Der Schaltring 14 weist erste Kontaktierelemente 42, 43, 44, 45 und 46 auf und ist weiterhin mit einem als Steckzunge realisierten zweiten Kontaktierelement 47 versehen.

Sind die Schaltringe 12, 13, 14 in den Hohlraum des Trägerbauteils 11 eingesetzt, dann wird dieser Hohlraum mittels der Abdeckung 15 verschlossen. Zu diesem Zweck weist die Abdeckung, bei der es sich um ein Kunststoffformteil handelt, Klammern 48, 49, 50, 51 und 52 auf, die beim Verschließen der Verschaltungseinheit 2 in jeweils zugehörige Nuten des Trägerbauteils 11 einrasten. Die Abdeckung 15 dient zur elektrischen Isolation der Verschaltungseinheit 2 gegenüber dem Statorpaket 1 und zusätzlich zur Versteifung der gesamten Verschaltungseinheit 2.

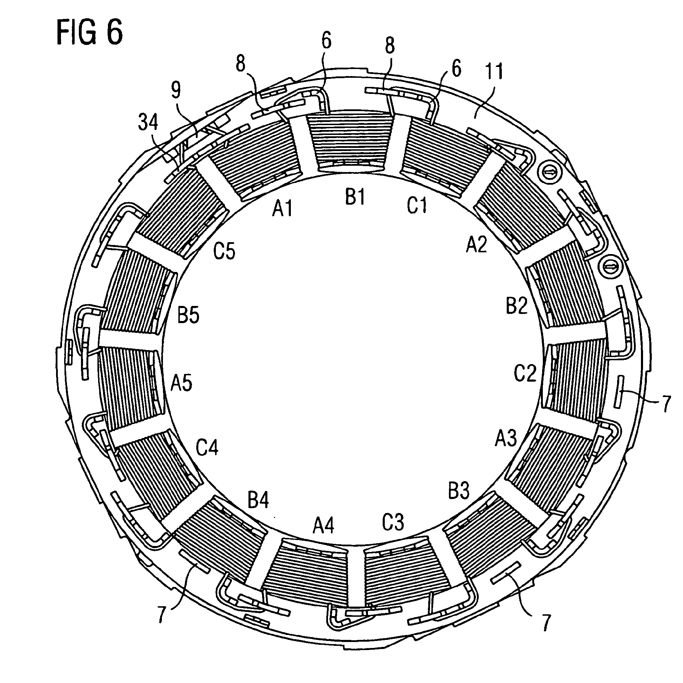

Die Figur 4 zeigt eine perspektivische Darstellung des bereits in der Figur 3 dargestellten Schaltrings 12, wobei dieser Schaltring zum Zwecke einer verbesserten Veranschaulichung nochmals separat dargestellt ist. Aus der Figur geht insbesondere hervor, dass die ersten Kontaktierelemente 31, 32, 33, 34 und 35 hakenförmig ausgebildet sind. Durch diese Haken wird - wie noch unten im Zusammenhang mit der Figur 6 erläutert wird - jeweils ein Wicklungsdraht geführt. Die gewünschte elektrische Kontaktierung des sich im Wicklungsdraht befindlichen elektrischen Leiters mit dem jeweiligen Haken, der Bestandteil des aus leitfähigem Material bestehenden Schaltrings 12 ist, erfolgt unter Verwendung eines Widerstandsschweißvorganges. Dabei wird die Ummantelung des Wicklungsdrahtes geschmolzen und eine Schweißverbindung erzeugt, die den gewünschten elektrischen Kontakt zwischen dem Leiter des Wicklungsdrahtes und dem Kontaktierelement herstellt.

Der in der Figur 4 gezeigte Haken 34 ist ein Doppelhaken, durch welchen insgesamt zwei Wicklungsdrähte geführt sind, bei denen es sich um den Wicklungsanfang und das Wicklungsende der Statorwicklung handelt. Diese beiden Wicklungsdrähte werden ebenfalls mittels eines Widerstandsschweißvorganges mit dem Haken 34 und damit dem Schaltring 12 elektrisch verbunden.

Weiterhin ist aus der Figur 4 das in Form einer Steckzunge realisierte zweite Kontaktierelement 36 des Schaltrings 12 ersichtlich, das zur externen Kontaktierung des Schaltrings bzw. des Stators vorgesehen ist.

Die Figur 5 zeigt eine Skizze zur Veranschaulichung der in den Hohlraum 55 des Trägerbauteils 11 eingebrachten Schaltringe 12, 13 und 14 von unten. Der Hohlraum 55 wird seitlich begrenzt von der äußeren Seitenwand 11a und der inneren Seitenwand 11b des Trägerbauteils 11. Von der inneren Seitenwand 11b aus erstrecken sich die Wicklungsträgerelemente des Trägerbauteils nach innen. Einige dieser Wicklungsträgerelemente sind in der Figur 5 mit dem Bezugszahlen 27, 28, 29 und 30 bezeichnet. Innerhalb des Hohlraumes 55 sind Trennwände 53 und 54 aus elektrisch nicht leitfähigem Material, vorzugsweise aus Kunststoffmaterial, vorgesehen. Diese erstrecken sich parallel zu den Seitenwänden 11a und 11b des Trägerbauteils 11 und bilden vorzugsweise zusammen mit diesem ein einteiliges Kunststoffformteil, das im Spritzgießverfahren hergestellt werden kann. Die Schaltringe 12, 13 und 14 sind durch die genannten Trennwände 53 und 54 elektrisch voneinander isoliert.

Die Figur 6 zeigt eine Darstellung einer Draufsicht auf einen bereits mit Wicklungen versehenen Stator. Alle aus der Figur 6 ersichtlichen Spulen sind aus einem einzigen Draht gewickelt. Der Drahtanfang wird von außen kommend durch eine der Einkerbungen des Drahtführungselementes 9 des Terminationsrings geführt und dann über das Kontaktierelement 34 auf den dort angeordneten Statorzahn aufgewickelt, wodurch die Spule A1 gebildet wird. Das Drahtende der Spule A1 wird über eines der auf dem Terminationsring vorgesehenen ersten Kontaktierelemente 8 und ein nachfolgendes Umlenkelement 6 geführt und bildet dann den Drahtanfang der Spule B1, die durch eine Aufwicklung des Drahtes auf dem benachbarten Statorzahn gebildet wird. Das Drahtende der Spule B1 wird über ein weiteres erstes Kontaktierelement 8 und ein nachfolgendes Umlenkelement 6 geführt und bildet dann den Drahtanfang der Spule C1, usw.. Das Drahtende der Spule C5 wird schließlich über die andere Einkerbung des Drahtführungselementes 9 wieder nach außen geführt. Folglich können alle Wicklungen des Stators mittels eines einzigen Wicklungsdrahtes hergestellt werden. Die gewünschte elektrische Kontaktierung der Spulen des Stators erfolgt durch einen Widerstandsschweißvorgang im Bereich des jeweiligen ersten Kontaktierelementes.

Beim gezeigten Ausführungsbeispiel bilden die Spulen eine Dreieckschaltung, wobei die Spulen A1, A2, A3, A4 und A5 eine Seite des Dreiecks, die Spulen B1, B2, B3, B4 und B5 eine zweite Seite des Dreiecks und die Spulen C1, C2, C3, C4 und C5 die dritte Seite des Dreiecks bilden. Die interne Verschaltung der Spulen erfolgt dabei über die ersten Kontaktierelemente 8, die jeweils Bestandteil eines der im Hohlraum des Trägerbauteils 11 angeordneten Schaltringe sind. Die externe Verschaltung erfolgt über die Steckzungen 7, wobei jede dieser Steckzungen Bestandteil eines der Schaltringe ist.

Alternativ zum obigen Ausführungsbeispiel können auch andere Schaltungstypen realisiert werden, beispielsweise eine Sternschaltung der Spulen, eine Reihenschaltung der Spulen oder eine Parallelschaltung der Spulen. Dazu ist es lediglich notwendig, die Anzahl der Schaltringe geeignet zu wählen, die Schaltringe mit der vom Schaltungstyp abhängigen Anzahl und Positionierung der Kontaktierelemente zu versehen und im Trägerbauteil 11 die Schlitze in Abhängigkeit vom gewünschten Schaltungstyp zu positionieren.

Wird die Anzahl der notwendigen internen Verschaltungen sehr groß, dann kann auf der hinteren Stirnseite des Stators anstelle eines zur Nutenisolierung vorgesehenen Isolierringes 3 eine weitere Verschaltungseinheit angeordnet werden.

Ein Stator gemäß der Erfindung ist nach alledem in einfacher Weise aufbaubar. Es sind keine komplizierten Verschaltungen der einzelnen Spulen durch Einzeldrähte notwendig. Das bei bekannten Lösungen notwendige, prozesstechnisch schwierige Verbinden der Drähte entfällt und wird durch ein einfaches Widerstandsschweißen ersetzt.

Aufgrund der internen Spulenkontaktierung unter Verwendung von Schaltringen verringert sich die stirnseitige Bauhöhe des Stators erheblich, da keine losen Drähte mehr gebündelt werden müssen. Die Maximalmaße des Stators sind genau definierbar. Die Gefahr loser Drähte ist durch die genaue Vorgabe definierter Schweißpositionen und Drahtumlenkpositionen nahezu ausgeschlossen.

Durch die genaue Drahtführung beim Wickeln und Schweißen ist die Prozesssicherheit bei der Statorherstellung verbessert. Die Gefahr von Kurzschlüssen ist stark reduziert.

Die bei der Erfindung verwendeten Schaltringe können durch einen Stanzvorgang und ein anschließendes Biegen hergestellt werden. Dabei ist zu beachten, dass die Genauigkeit der Abwicklung maßgebend ist. Die anschließende genaue Positionierung ist durch die Schlitze im Trägerbauteil 11 sichergestellt.

Die benötigten Kunststoffbauteile, nämlich der Trägerbauteil 11, die Abdeckung 15 und die Isolierung 3, werden vorzugsweise im Spritzgussverfahren hergestellt. Dabei handelt es sich um ein bewährtes Verfahren, welches hohe Prozesssicherheit in Verbindung mit geringen Kosten gewährleistet.

Die Abmessungen der Schaltringe 12, 13, 14 können je nach Bedarf in Abhängigkeit von den herrschenden Strom- und Spannungsverhältnissen geeignet gewählt werden. Die Schaltringe 12, 13, 14 sind beim obigen Ausführungsbeispiel "stehend" auf dem Statorjoch ausgebildet, d. h. achsparallel zur Motorachse angeordnet. Alternativ dazu ist es ohne weiteres möglich, die Schaltringe "liegend" auf dem Statorjoch anzuordnen, d. h. im rechten Winkel zur Motorachse.

Die unter Verwendung des Stators gebildete elektrische Maschine ist wenig anfällig gegen mechanische Stöße und Vibrationen. Die Anfälligkeit gegen Oxidation ist aufgrund des Fehlens von Schmutztaschen in Drahtkreuzungen reduziert.

Durch eine Verwendung von Kupfer als Material für die Schaltringe können die Ohmschen Verlustwiderstände reduziert werden.

Die Schaltringe können so ausgeführt werden, dass aus der symmetrischen Wicklungsanordnung am Umfang des Stators eine unsymmetrische Kontaktiermöglichkeit zu einer im Antrieb integrierten Elektronik möglich ist. Trotz der unsymmetrischen Schnittstelle zur Elektronik können deshalb durch die Ausführung der Schaltringe als Kupferteile Stromunsymmetrien im Betrieb des Antriebs wirksam vermieden werden.

Die beschriebene interne Verschaltung der Spulen erfolgt ohne nennenswerte Wirkungsgradreduzierung. Dies ist insbesondere bei Niederspannungs- und damit Hochstromanwendungen notwendig, um den Gesamtwirkungsgrad des Antriebs in einem geforderten Bereich zu halten. Ein Beispiel für eine derartige Anwendung liegt bei Kraftfahrzeugen mit einer Bordnetzspannung von 12V vor.

Der Zusammenbau einer elektrischen Maschine erfolgt beispielsweise dadurch, dass das Motorgehäuse mit eingebautem Stator über die Steckzungen des Stators mit den entsprechenden Anschlussstellen der externen Elektronik oder der externen Stromversorgung kontaktiert wird, wobei die externe Elektronik im Motordeckel befestigt sein kann. Diese Verbindung unter Verwendung von Steckzungen ist in vorteilhafter Weise bei Bedarf schnell, einfach und zerstörungsfrei lösbar. Dies vereinfacht Reparatur- und Nachbesserungsarbeiten und wird neueren Umweltanforderungen besser gerecht als bisher bekannte Lösungen.

## Patentansprüche

1. Stator für einen Elektromotor, mit
- einem ringförmigen Statorpaket (1), das eine Mehrzahl von sich nach innen erstreckenden Statorzähnen (4) mit Einzelzahnwicklung (5) aufweist, und
- einer auf einer Stirnseite des Statorpakets (1) angeordneten ringförmigen Verschaltungseinheit (2), wobei
- die ringförmige Verschaltungseinheit (2) ein Trägerbauteil (11) aufweist und
- das Trägerbauteil (11) sich nach innen erstreckende Wicklungsträgerelemente (27-30) aufweist, die unmittelbar an die Statorzähne (4) anschließen, als Nutisolierelmente ausgebildet sind und Ausformugen aufweisen, die ein Abrutschen der Einzelzahnwicklungen (5) vom jeweiligen Statorzahn (4) verhindern, wobei
- das Trägerbauteil (11) aus elektrisch nicht leitfähigem Material besteht, und wobei
- das Trägerbauteil (11) mit einem Hohlraum (55) versehen ist, im welchem mehrere elektrischen voneinander isolierte Schaltringe (12, 13, 14) angeordnet sind,
**dadurch gekennzeichnet, dass**
- die ringförmige Verschaltungseinheit (2) auf ihrer vom Statorpacket (1) abgelegenene Stirnseite mit Umlenkelementen (6) versehen ist,
- jeder Schaltring (12, 13, 14) Kontaktierelemente (7, 8; 31-47) aufweist,
- die Kontaktierelemente (7, 8; 31-47) der Schaltringe (12, 13, 14) durch Schlitze (16 - 21) im Trägerbauteil (11) nach außen geführt sind und
- das Trägerbauteil (11), welches die sich nach innen erstreckende Wicklungsträgerelemente (27-30) aufweist, ein einteiliges ringförmiges Kunststoffformteil ist.

2. Stator nach Anspruch 1,
**dadurch gekennzeichnet, dass**
das Trägerbauteil (11) ein Kunststoffformteil ist, welches in seinen Hohlraum (55) hineinreichende Trennwände (53, 54) aufweist, durch welche die Schaltringe (12, 13, 14) elektrisch voneinander isoliert sind.

3. Stator nach Anspruch 1 oder 2,
**dadurch gekennzeichnet, dass**
jeder Schaltring (12, 13, 14) erste Kontaktierelemente (18 ,31 - 35, 37 - 40, 42 - 46) aufweist, die zur internen Verschaltung von auf die Statorzähne (4) aufgebrachten Wicklungen (5) vorgesehen sind.

4. Stator nach Anspruch 3,
**dadurch gekennzeichnet, dass**
das Wicklungsende einer Wicklung jeweils über eines der Umlenkelemente (6, 22 - 26) geführt ist und den Wicklungsanfang der Nachbarwicklung bildet.

5. Stator nach Anspruch 4,
**dadurch gekennzeichnet, dass**
jedem Umlenkelement (6, 22 - 26) eines der durch einen Schlitz des Trägerbauteils (11) nach außen geführten ersten Kontaktierelemente (18, 31 - 35, 37 - 40, 42 - 46) zugeordnet ist, dass der über das Umlenkelement (6, 22 - 26) geführte Wicklungsdraht auch über das dem Umlenkelement (6, 22 - 26) zugeordnete erste Kontaktierelement (18, 31 - 35, 37 - 40, 42 - 46) geführt ist und dass die elektrische Kontaktierung des ersten Kontaktierelementes (18, 31 - 35, 37 - 40, 42 - 46) mit dem im Drahtinneren befindlichen elektrischen Leiter durch einen Widerstandsschweissvorgang hergestellt ist.

6. Stator nach einem der Ansprüche 3 - 5,
**dadurch gekennzeichnet, dass**
die ersten Kontaktierelemente (18, 31-35, 37-40, 42-46) Haken aufweisen.

7. Stator nach einem der vorhergehenden Ansprüche,
**dadurch gekennzeichnet, dass**
jeder Schaltring (12, 13, 14) ein zweites Kontaktierelement (36, 41, 47) aufweist, das zur Verschaltung mit einer externen Elektronik oder einer externen Stromversorgung vorgesehen ist.

8. Stator nach Anspruch 7,
**dadurch gekennzeichnet, dass**
die zweiten Kontaktierelemente (36, 41, 47) Steckzungen sind.

9. Stator nach einem der vorhergehenden Ansprüche,
**dadurch gekennzeichnet, dass**
die ringförmige Verschaltungseinheit (2) an ihrer dem Statorpaket (1) zugewandten Stirnseite mit einer Abdeckung (15) aus nicht leitfähigem Material versehen ist.

10. Stator nach einem der vorhergehenden Ansprüche,
**dadurch gekennzeichnet, dass**
er auf der von der Verschaltungseinheit (2) abgelegenen Stirnseite einen Isolierring (3) oder eine zweite Verschaltungseinheit aufweist.

## Claims

1. Stator for an electric motor, having
- an annular stator core (1) which has a plurality of stator teeth (4) which extend inwards and have a single-tooth winding (5), and
- an annular connection unit (2) which is arranged on an end face of the stator core (1), with
- the annular connection unit (2) having a support component (11) and
- the support component (11) having winding support elements (27-30) which extend inwards, directly adjoin the stator teeth (4), are in the form of slot insulation elements and have recesses which prevent the single-tooth windings (5) from sliding off the respective stator tooth (4), with
- the support component (11) being composed of an electrically non-conductive material, and with
- the support component (11) being provided with a cavity (55) in which a plurality of switching rings (12, 13, 14) which are electrically insulated from one another are arranged,
**characterized in that**
- the annular connection unit (2) is provided with deflection elements (6) on its end face which is remote from the stator core (1),
- each switching ring (12, 13, 14) has contact-making elements (7, 8; 31-47),
- the contact-making elements (7, 8; 31-47) of the switching rings (12, 13, 14) are routed towards the outside through slots (16-21) in the support component (11), and
- the support component (11), which has the winding support elements (27-30) which extend inwards, is an integral annular shaped plastic part.

2. Stator according to Claim 1,
**characterized in that**
the support component (11) is a shaped plastic part which has partition walls (53, 54) which extend into the cavity (55) in the said support component and by means of which the switching rings (12, 13, 14) are electrically insulated from one another.

3. Stator according to Claim 1 or 2,
**characterized in that**
each switching ring (12, 13, 14) has first contact-making elements (18, 31-35, 37-40, 42-46) which are provided for internally connecting windings (5) which are provided on the stator teeth (4).

4. Stator according to Claim 3,
**characterized in that**
the winding end of a winding is routed in each case by means of one of the deflection elements (6, 22-26) and forms the winding start of the neighbouring winding.

5. Stator according to Claim 4,
**characterized in that**
one of the first contact-making elements (18, 31-35, 37-40, 42-46) which are routed towards the outside through a slot in the support component (11) is associated with each deflection element (6, 22-26), **in that** the winding wire which is routed by means of the deflection element (6, 22-26) is also routed by means of the first contact-making element (18, 31-35, 37-40, 42-46) which is associated with the deflection element (6, 22-26), and **in that** the electrical contact-connection between the first contact-making element (18, 31-35, 37-40, 42-46) and the electrical conductor which is located in the interior of the wire is established by a resistance welding process.

6. Stator according to one of Claims 3-5,
**characterized in that**
the first contact-making elements (18, 31-35, 37-40, 42-46) have hooks.

7. Stator according to one of the preceding claims,
**characterized in that**
each switching ring (12, 13, 14) has a second contact-making element (36, 41, 47) which is provided for the purpose of connection to an external electronics system or an external power supply means.

8. Stator according to Claim 7,
**characterized in that**
the second contact-making elements (36, 41, 47) are plug-type tongues.

9. Stator according to one of the preceding claims,
**characterized in that**
the annular connection unit (2) is provided with a cover (15), which is composed of non-conductive material, on its end face which faces the stator core (1).

10. Stator according to one of the preceding claims,
**characterized in that**
it has an insulating ring (3) or a second connection unit on that end face which is remote from the connection unit (2).

## Revendications

1. Stator pour un moteur électrique, comprenant
- un paquet de tôles de stator annulaire (1), qui présente une pluralité de dents de stator (5) s'étendant vers l'intérieur et à enroulement de dent individuel (5), et
- une unité de connexion annulaire (2) disposée sur une face frontale du paquet de tôles de stator (1),
- l'unité de connexion annulaire (2) présentant un composant de support (11) et
- le composant de support (11) présentant des éléments de support d'enroulement (27-30) s'étendant vers l'intérieur, qui se raccordent directement aux dents de stator (4), sont conçus comme des éléments d'isolation de rainures et comportent des évidements qui empêchent tout glissement des enroulements de dent individuels (5) de la dent de stator correspondante (4),
- le composant de support (11) étant réalisé en un matériau non conducteur électriquement, et
- le composant de support (11) étant pourvu d'une cavité (55) dans laquelle sont disposées plusieurs bague de commutation (12, 13, 14) électriquement isolées les unes des autres,
**caractérisé en ce que**
- l'unité de connexion annulaire (2) est, sur son côté frontal opposé au paquet de tôles de stator (1), dotée d'éléments de renvoi (6),
- chaque bague de commutation (12, 13, 14) présente des éléments de contact (7, 8 ; 31-47),
- les éléments de contact (7, 8 ; 31-47) des bagues de commutation (12, 13, 14) sont guidés vers l'extérieur par des fentes (16-21) dans le composant de support (11) et
- le composant de support (11), qui comprend les éléments de support d'enroulement (27-30) s'étendant vers l'intérieur, est une pièce annulaire façonnée en plastique réalisée d'un seul tenant.

2. Stator selon la revendication 1, **caractérisé en ce que** le composant de support (11) est une pièce façonnée en plastique qui présente des parois de séparation (53, 54) passant dans sa cavité (55), parois grâce auxquelles les bagues de commutation (12, 13, 14) sont électriquement isolées les unes des autres.

3. Stator selon la revendication 1 ou 2, **caractérisé en ce que** chaque bague de commutation (12, 13, 14) présente des premiers éléments de contact (18, 31-35, 37-40, 42-46) qui sont prévus pour la connexion interne d'enroulements (5) disposés sur les dents de stator (4).

4. Stator selon la revendication 3, **caractérisé en ce que** l'extrémité d'un enroulement est à chaque fois guidée par un des éléments de renvoi (6, 22-26) et forme le début d'enroulement de l'enroulement voisin.

5. Stator selon la revendication 4, **caractérisé en ce qu'**à chaque élément de renvoi (6, 22-26) est affecté un des premiers éléments de contact (18, 31-35, 37-40, 42-46) guidés vers l'extérieur par une fente du composant de support (11), **en ce que** le fil d'enroulement guidé par l'élément de renvoi (6, 22-26) est également guidé par le premier élément de contact (18, 31-35, 37-40, 42-46) affecté à l'élément de renvoi (6, 22-26) et **en ce que** le contact électrique du premier élément de contact (18, 31-35, 37-40, 42-46) avec le conducteur électrique se trouvant à l'intérieur du fil est établi par une opération de soudage par résistance.

6. Stator selon l'une des revendications 3 à 5, **caractérisé en ce que** les premiers éléments de contact (18, 31-35, 37-40, 42-46) présentent des crochets.

7. Stator selon l'une des revendications précédentes, **caractérisé en ce que** chaque bague de commutation (12, 13, 14) présente un deuxième élément de contact (36, 41, 47) qui est prévu pour la connexion avec une électronique externe ou une alimentation externe.

8. Stator selon la revendication 7, **caractérisé en ce que** les deuxièmes éléments de contact (36, 41, 47) sont des broches.

9. Stator selon l'une des revendications précédentes, **caractérisé en ce que** l'unité de connexion annulaire (2) est, sur sa face frontale tournée vers la paquet de tôles de stator (1), dotée d'un élément de recouvrement (15) en matériau non conducteur.

10. Stator selon l'une des revendications précédentes, **caractérisé en ce qu'**il présente, sur sa face frontale opposée à l'unité de connexion (2), une bague isolante (3) ou une deuxième unité de connexion.
